# EUROPEAN PATENT APPLICATION

(11) **EP 4 276 512 A1**
(43) Date of publication of application: **15.11.2023**
(21) Application number: 22172881.9
(22) Date of filing: 12.05.2022
(51) Int. Cl.: G02B 21/36

(54) **ARRAY OF LIGHT SOURCES, FOURIER PTYCHOGRAPHIC IMAGING SYSTEM AND METHOD OF PERFORMING FOURIER PTYCHOGRAPHY**

(71) Applicant: Siemens Healthcare GmbH, 91052 Erlangen (DE)
(72) Inventor: Engel, Thomas, 73432 Aalen (DE); Dethlefsen, Mark, 91058 Erlangen (DE); Marquardt, Gaby, 91353 Hausen (DE)
(74) Representative: Maier, Daniel Oliver

(57) **Abstract**

The invention relates to an array of light sources (2) for a Fourier ptychographic imaging system (100), comprising at least two adjacent light sources (2) which differ from each other in a property of light beams emitted from them and are configured to illuminate a sample (4) at different angles of incidence for reconstructing a single image of the sample using Fourier ptychography, wherein the property of light beams of each light source (2) is configured to match the sample (4) for increasing a contrast and/or a color or material information content in the reconstructed single image of the sample (4).

## Description

The present invention relates to an array of light sources for a Fourier ptychographic imaging system, a Fourier ptychographic imaging system and a method of performing Fourier ptychography.

### State of the Art

Fourier Ptychography Microscopy (FPM) is a novel computational microscopy technique that generates high resolution images at large Field of Views (FoV) . This is achieved by capturing an image sequence of a region of interest of a sample under various illumination angles greater than the Numerical Aperture (NA) of the used objective in bright-field mode and/or dark-field mode, and iteratively combining these images in Fourier space into a single high-resolution image.

The images may be taken by a FPM microscope which can be assumed to be optically corrected to take images of the sample in considerably good quality, without significant distortion or chromatic aberrations.

Typically, Fourier Ptychography images are captured with a monochrome camera and a colored illumination e.g. by white light or a light source with broader spectrum plus bandpass filters with selected wavelength or preferably Light-Emitting Diodes (LED) of a narrow bandwidth. As the illuminator or the light source, a flat array of LEDs or a hemispherical setup can be used. Some systems also have narrow bandwidth bandpass filters to even further decrease the bandwidth of the light in a particular image. The illumination wavelength may be selected by the LED used or in combination with bandpass filters with the Full-Width-at-Half-Maximum (FWHM) of e.g. 10, 50 or 80 nm in front of the monochrome camera. Color images are composed from separate image sets taken at different wavelengths, which are then reconstructed separately into (quasi-)monochromatic high resolution images. If required, these high resolution images can be combined to form color images afterwards.

Microscopic samples, such as biological samples and medical samples, typically consist of different materials or tissues, however, still have a relatively low or a considerably low material contrast at a given or specific wavelength for the different materials in a respective sample area. Consequently, in the final reconstructed image using Fourier Ptychography, changes in material or material composition of the sample cannot be detected or clearly differentiated.

Accordingly, it is an object of the present invention to provide a solution for Fourier ptychography which increases and optimizes the material differentiation in the single reconstructed image of the sample.

### Summary of the Invention

This object is inventively achieved by the subject matter of the independent claims. Advantageous further developments may be taken from the dependent claims.

The invention provides, according to a first aspect, an array of light sources for a Fourier ptychographic imaging system, comprising at least two adjacent light sources which differ from each other in a property of light beams emitted from them and are configured to illuminate a sample at different angles of incidence for reconstructing a single image of the sample using Fourier ptychography, wherein the property of light beams of each light source is configured to match the sample for increasing a contrast and/or a color or material information content in the reconstructed single image of the sample.

It is favorable that the present invention utilizes the differences in the property of light beams from different light sources in terms of spectral content when taking the images of an image set in order to improve and optimize the material contrast throughout the image set, i.e., between different sub-images, to better detect and differentiate changes in material or material composition of the sample.

By means of the inventive array of light sources, the number of sub-images of a single image set does not need to be increased. Rather, the material differentiation is increased and optimized by increasing the absorption contrast, or by optimizing the diffraction efficiency or the sensitivity to refractive changes, to optimize the signal for a single image of given illumination direction or multiple directions overlapped.

In a preferable embodiment of the array of light sources, the property of light beams comprises a wavelength, a bandwidth, a spectral profile and/or a polarization of the light beams.

The wavelengths of light beams emitted from the light sources may range from UV (including DUV < 200 nm) via VIS to IR (including SWIR and NIR up to 2500 nm) . Said wavelengths of light beams are only limited by the camera technology and the optics to generate proper images.

It is advantageous to mix light sources which are different from each other in wavelength, bandwidth/spectrum, and/or polarization of the generated light beams for a single reconstruction.

The approach of using e.g. multi-wavelength light sources enables to generate images with optimized or tailored contrast settings, even for samples which are difficult to image at a single given wavelength.

In addition, filters may be used which can shape the intensity distribution of the LED to a desired and quite arbitrary shape, such as multi-bands for a single LED.

In a further preferable embodiment of the array of light sources, the contrast in the reconstructed single image of the sample depends on an interaction property of the light beams of the respective light source with a given location of the sample.

The present invention exploits the fact that the single images taken with e.g. different wavelengths have the same physical location and feature structure on the image sensor, but they may differ in contrast depending on the respective interaction properties of the light of the respective wavelength with specific locations of the sample.

In a further preferable embodiment of the array of light sources, the interaction property comprises an absorption, a refraction, a scattering and/or a diffraction of the light beams of the respective light source at the given location of the sample.

In a further preferable embodiment of the array of light sources, the interaction property depends on the property of light beams of the respective light source and a material and/or a geometry at the given location of the sample.

In a further preferable embodiment of the array of light sources, the array of light sources comprises at least three light sources which are a first light source, a second light source and a third light source, wherein the first light source is adjacent to the second light source which is further adjacent to the third light source, wherein the first and second light sources differ from each other in a property of light beams emitted from them, wherein the second and third light sources differ from each other in a property of light beams emitted from them, and wherein the first and third light sources comprise the same property of light beams emitted from them.

In a typical state-of-the-art FPM system, neighboring light sources in a light source array should have an overlap of at least 35% in aperture or in Fourier space. The overlap is needed to properly stitch the image content of different illumination angles.

In this embodiment of the present invention, neighboring light sources may have different wavelengths. However, a more distant light source - the third light source, e.g. the next but one light source, has the same wavelength as the first light source.

The second light source which is the "middle" light source serves to secure the image reconstruction algorithm to properly stich the two neighboring light sources of the same type for proper alignment of the contributions in Fourier space.

This assignment of light sources with different wavelengths is attributed to the fact that there is a physical reconstruction directly from the Fourier transforms of the color corrected images while omitting the further transformation to an angular coordinate system as typically used in Fourier ptychography.

In a further preferable embodiment of the array of light sources, in the reconstruction process using Fourier ptychography, an image taken by means of the second light source comprises a lower weighting factor than images taken by means of the first and third light sources.

The information of the "middle" light source is fitted or used with a less weighting factor or only intermediately to properly stitch the information for the light sources of the same property such as wavelength, bandwidth, or polarization, when homogenizing the information in the iterative reconstruction cycles.

This approach may resemble the same kind of reconstructed images for single colors as in the typical reconstructions. However, the number of sub-images used for different wavelengths substantially reduces.

This approach of alternating light sources of different wavelengths can be used for a low number of wavelengths such as 2 or 3 different wavelengths which are preferably arranged in a rectangular, hexagonal or circular shape in flat or 3D form with equal or chirped distances between the light sources from center to high apertures.

In a further preferable embodiment of the array of light sources, in the reconstruction process using Fourier ptychography, an image taken by means of the second light source comprises the same weighting factor as images taken by means of the first and third light sources.

Thereby, the "middle" light source is weighted the same as the other light sources, irrespective of the individual color. In this case, the respective information content of all images, irrespective of the used wavelength, contributes with the same weight to the final synthesized image.

By means of this approach, a generic resolution can be achieved where different wavelengths contribute to the final image. This approach is irrespective of whether it is an image taken by a monochrome sensor or a color image taken by a color sensor or generated from multiple monochrome images with different illumination settings.

In a further preferable embodiment of the array of light sources, the array of light sources comprises a plurality of light sources, in particular more than three light sources, preferably more than five light sources, wherein the plurality of light sources form at least two clusters, wherein light sources within each cluster are adjacent to each other, and wherein the property of light beams of light sources in each cluster is configured to match a given location of the sample for increasing a contrast in the reconstructed single image of the given location of the sample.

Thereby, the light sources of a different spectral content (such as the wavelength, bandwidth, and polarization) are arranged in quasi (local) clusters for each type of light sources. For example, central light sources for the bright-field imaging part are more adopted to absorption contrasting and thus preferably selected dependent on the sample properties, while dark-field light sources are more adopted to the angular scattering properties of the sample regarding refraction, dispersion and/or diffraction where absorption might be hindering since the optical pathway in the sample is prolonged, and thus the signal is attenuated more along its propagation path.

In a further preferable embodiment of the array of light sources, the array of light sources is configured to be selected based on a type of the sample.

For example, for unstained biological samples, such as body fluids, blood cells and tissues, the absorption contrasting is considerably weak in the visible spectrum. Therefore, the bright-field imaging light sources can be selected from the non-visible spectral ranges such as UV or IR. In the UV range, there are different absorption mechanisms based on carbon bonds of the organic compounds which can lead to quite strong absorption contrast in the range of 200-380 nm, especially in the range of 250-320 nm, which can be easily implemented by using commercial LEDs. Preferably the light sources are configured to emit light in the range of 200 to 380 nm, most preferably in the range of 250 to 320 nm.

The invention provides, according to a second aspect, a Fourier ptychographic imaging system comprising the array of light sources according to the first aspect.

In a preferable embodiment of the Fourier ptychographic imaging system, the Fourier ptychographic imaging system comprises a bandpass filter, a notch filter, a filter defining a complex spectral profile, and/or an edge filter arranged between the array of light sources and a camera sensor of the Fourier ptychographic imaging system. This filter is preferably inserted into the imaging beam path between the objective lens and the camera.

Thereby, the spectral characteristics and/or material differentiation in the (absorption) contrast is improved. The dark-field illumination may consist of different, e.g. longer wavelengths, e.g. in VIS or IR range, since light beams in these ranges might be scattered more efficiently based on the feature sizes of the sample under test.

In a further preferable embodiment of the Fourier ptychographic imaging system, the Fourier ptychographic imaging system comprises an objective, wherein an objective aperture of the objective is dividable into a number of segments, wherein each segment of the objective aperture is associated with a light source or a cluster of light sources in the array of light sources.

In order to further utilize the local clustering of light sources, the illumination system may be structured in such a manner that the entire objective aperture range or the objective aperture in the bright-field and/or dark-field illumination portion is sectored into multiple segments/regions such as two, three, four, six or eight segments, and each segment is equipped with a different light source or a different combination of light sources (in wavelength, bandwidth and/or polarization) used in the illumination system.

As described above in a preferable embodiment of the array of light sources, each light source may have nearest neighbors of different type. However, the same type of light source is preferably arranged in such a way that a larger segment/portion of illumination and/or imaging aperture space can be filled for this particular light source type or a given combination of light source types.

Due to high degree of symmetry in the Fourier space, sectors of point symmetric locations may use quite different types of light sources in order to optimize the sampling efficiency for the sample in the imaging and reconstruction process. For instance, when the light source has four, six or eight segments, there might be two, two or three, or two or four different selections of light sources for a respective segment. These combinations might be chosen in a given sequence for neighboring segments. For example, in the case of six segments and two types of light source, there are three segments of each type and neighboring segments have light sources of different types. This results in a setup where none of the segments is opposite to another segment of the same type, demonstrating a broader coverage in aperture space for one type/set of wavelengths without losing any piece of information even for small details of the object. Further optimization can be achieved, if neighboring light sources in radial direction also comprise of different types in order to sample the Fourier space with an optimized sampling strategy with respect to homogeneity of sampling for a given light source type.

The invention provides, according to a third aspect, a method of performing Fourier ptychography, comprising: illuminating a sample at different angles of incidence by at least two adjacent light sources in an array of light sources, wherein the at least two adjacent light sources differ from each other in a property of light beams emitted from them, and the property of light beams of each of the at least two light source matches the sample for increasing a contrast in a single image of the sample to be reconstructed; capturing images of the sample by a camera, by means of the light beams from the at least two adjacent light sources; and reconstructing the single image of the sample by using the taken images.

In a preferable embodiment of the method, the property of light beams comprises a wavelength, a bandwidth, and/or a polarization of the light beams.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts.
Fig. 1a shows a setup of a Fourier ptychographic imaging system comprising an array of light sources according to an embodiment of the invention, in a perspective view;
Fig. 1b shows the Fourier spectrum of the sample at the objective's back-focal plane according to the setup of a Fourier ptychographic imaging system shown in Fig. 1a;
Fig. 1c shows shifting illumination angle by illuminating LEDs at different location according to the setup of a Fourier ptychographic imaging system shown in Fig. 1a;
Fig. 2 shows an illuminating device comprising an array of light sources according to another embodiment of the invention;
Fig. 3 shows a view of an array of light sources according to another embodiment of the invention, in the sample plane;
Fig. 4 shows a view of an array of light sources according to another embodiment of the invention, in the sample plane; and
Fig. 5 shows a block diagram of an embodiment of a method of performing Fourier ptychography.

### Detailed description of the invention

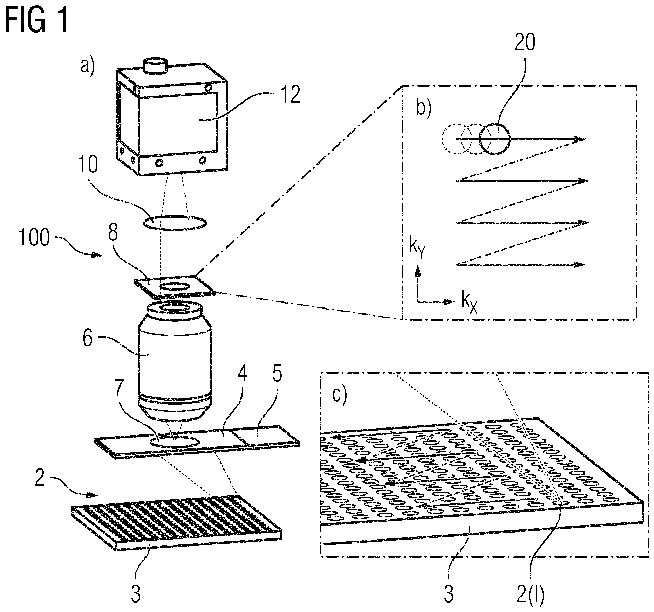

Fig. 1a shows in a perspective view a setup of a Fourier ptychographic imaging system 100 comprising an array of light sources 2 according to an embodiment of the invention which are placed on a carrier board 3. The Fourier ptychographic imaging system 100 further comprises from bottom to top as shown in the illustration a sample 4 placed in a sample plane 5, an objective 6, a tube lens 10 and a camera 12 for capturing images of the sample 4. As shown in Fig. 1a, a region of interest 7 of the sample 4 is illuminated by the array of light sources 2 which are flashed consecutively in order to achieve illumination under a specific illumination angle. The hollow rectangle 8 represents the rear-focal plane of the objective 6 and/or corresponds to the aperture plane of the objective 6.

In the embodiment shown in Fig. 1a, the array of light sources 2 consists of a spatial distribution of separate low aperture LEDs which amount to 15*15 = 225 pieces. In other embodiments not shown, laser-based or fiber-based light sources are possible.

As shown in Fig. 1a, the LEDs 2 are located on a plane in a grid shape of equidistant spacing in the x and y directions. In other embodiments not shown, the LEDs are located on a plane in a grid shape of equidistant spacing only in the x direction or only in the y direction. In another embodiment, the LEDs 2 are located on a plane in a grid shape with a chirped spacing of neighboring light sources so that the effective angular spacing as seen from the object is regular, i.e. equidistant in shape.

In another embodiment, the light sources 2 are arranged on a three-dimensional structure such as on a hemisphere, where each light source has the same effective geometrical distance from the center of the field of view of the optics and in a preferred embodiment, the optical axis of each LED points to the center of the FoV of the optical system in the best focus focal plane setting. In general, any other spatial distribution of effective light sources is possible. The particular design can be calibrated in order to establish proper image reconstruction performance of the FPM system.

In some embodiments, at a particular location of the grid, a single or multi-color light source is installed and preferably individually controlled in its intensity over time, e.g. being switched on or off and set with appropriate power levels which may be fixed, pre-calibrated and preferably linearized for adaptive settings.

Conventionally, all grid positions are equipped with the same type of light sources. This design is essentially dictated by the requirement of the reconstruction algorithm for (quasi-)monochromatic image sets. However, not all wavelengths are equally useful in all possible positions of the illumination grid. For example, it can be imagined that wavelengths matched to strong absorption bands of a sample may be preferable for the bright-field regions of the illumination system, while the dark-field light-sources are matched to wavelength regions where the scattering cross-section of the sample is large.

In the present invention, different light sources with e.g. different but known wavelengths and/or bandwidths are arranged at different positions of the grid, and it is not necessary to have nominally identical light sources at all of the grid positions.

The single images taken with e.g. different wavelengths have the same physical location on the sample and thus feature structure on the image sensor of the camera 12, but they may differ in contrast depending on the respective interaction properties of the light of the respective wavelength with specific locations of the sample 4. The interaction property comprises absorption, refraction, scattering and/or diffraction property of the light beams of the respective light source 2 at the given location 7 of the sample 4. The interaction property depends on the property of light beams of the respective light source such as the wavelength, a bandwidth, and/or a polarization of the light beams, and also depends on the material and/or the geometry at the given location 7 of the sample 4.

By means of the array of light sources 2, the number of sub-images of a single image set does not need to be increased. Rather, the material differentiation is increased and optimized by e.g. increasing the absorption contrast, or by optimizing the diffraction efficiency or the sensitivity to refractive changes, to optimize the signal for a single image of a given illumination direction or multiple directions overlapped.

Fig. 1b shows the Fourier spectrum of the sample 4 at the objective's back-focal plane according to the setup of a Fourier ptychographic imaging system shown in Fig. 1a. The circular sub-region 20 corresponds to the aperture size of the objective 6 and shifts with the shifting illumination angle.

The light field emitted from one LED 2 can be approximated as a plane wave within a small region at the sample plane because the large distance between the LED 2 and the sample 4 increases the spatial coherence of the LED 2. The plane wave has vector components (kx, ky) associated with the oblique illumination of the LED 2 on the sample 4. Lighting up one LED 2 causes the sample' s Fourier spectrum to be shifted by (kx, ky) at the objective lens' s rear-focal plane, and the finite numerical aperture (NA) of the objective lens acts as a low-pass filter that transmits only a small sub-region at the center of the shifted Fourier spectrum. The low-passed Fourier component is further propagated to the image plane and is captured by the camera 12. The LEDs 2 are lit up sequentially so that the captured images contain partially overlapping Fourier sub-regions that together span the entire Fourier spectrum of the sample 4.

In Fig. 1c, a part of the LED array on the carrier board 3 is shown in an enlarged view. The parallel arrows and the parallel dashed lines shown in Fig. 1c represent the sequentially switching of the LEDs 2 at different locations on the matrix in order to realize the illumination angle shifting. In the state shown in Fig. 1c, the LED 2i is switched on for providing the illumination.

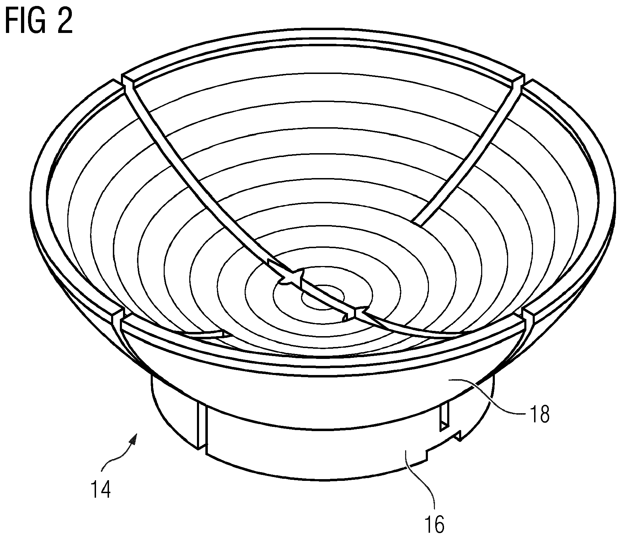

Fig. 2 shows an illuminating device 14 comprising a base unit 16 and a hemispherical carrier 18 fixed onto the base unit 16. On the hemispherical carrier 18, a hemispherical setup of LEDs (not shown) is provided, where each LED has the same effective geometrical distance from the center of the field of view of the optics. Due to the hemispherical setup, the optical axis of each LED is directed towards the axis of symmetry of the hemisphere and all optical axis should intersect at the nominal focus position of the optics to improve illumination homogeneity for the FoV.

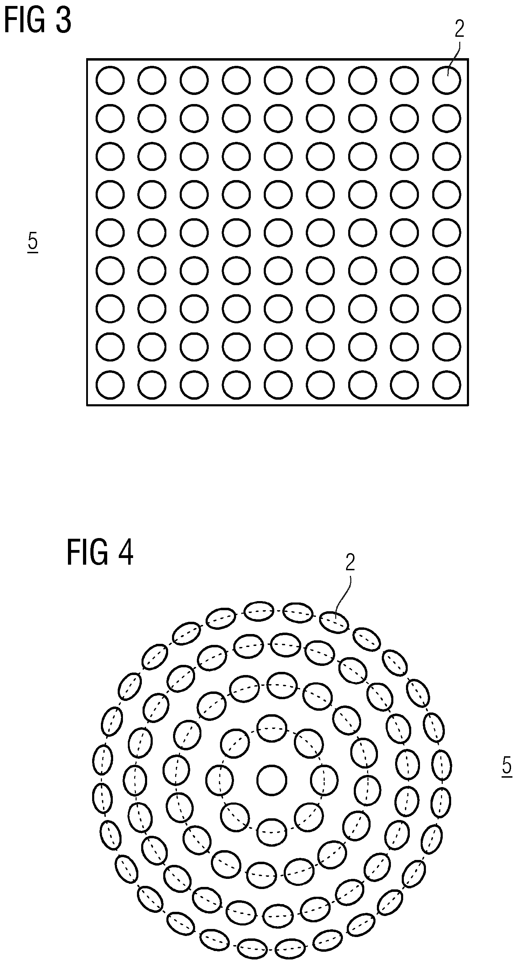

Fig. 3 shows a view of an array of light sources according to another embodiment of the invention, in the sample plane 5. In this embodiment, 9*9 = 81 LEDs 2 arranged in flat form are adopted for forming a rectangular illuminator.

Fig. 4 shows a view of an array of light sources according to another embodiment of the invention, in the sample plane 5. In this embodiment, 76 LEDs 2 in total arranged in three-dimensional form are adopted for forming a hemispherical illuminator. The LEDs 2 are at a constant radial distance from the intersection of the optical axis (+) and the sample plane 5. In the view shown in Fig. 4, the angular increment for the rings formed by the LEDs is fixed, and for each ring, the LEDs have a "constant" angular spacing. An individual azimuthal offset per ring may be set in order to avoid overtone effects.

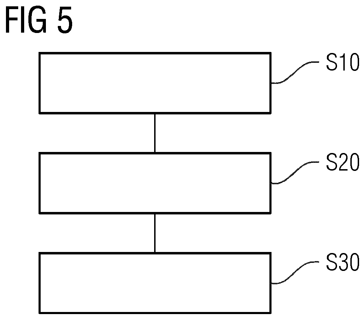

The embodiment of the method of performing Fourier ptychography shown in Fig. 5 comprises three steps. In step S10, a sample is illuminated at different angles of incidence by at least two adjacent light sources in an array of light sources, wherein the at least two adjacent light sources differ from each other in a property of light beams emitted from them, and the property of light beams of each of the at least two light source matches the sample for increasing a contrast in a single image of the sample to be reconstructed. In step S20, images of the sample are captured by a camera, by means of the light beams from the at least two adjacent light sources. In step S30, the single image of the sample is reconstructed by using the images taken.

The present invention is not limited to microscopy, but applies to Fourier ptychography in general.

In some embodiments, the (local) clustering of light sources with wavelengths can also be used to further expand the NA according to state-of-the-art reconstruction methods. When the wavelengths become shorter for the higher NA of illumination or there is some overlap with the normal wavelength of illumination for the respective image set, the effective maximal NA can further be increased for the reconstructed image, even though it is based on a different wavelength.

In order to optimize the image quality of the images taken for a single image set, it may be preferential to select wavelength for illumination corresponding to the design wavelength of the imaging optics for chromatic correction such as achromatization and apochromatization. If this is not possible, it is preferential to optimize the setup to group the illumination of same focal settings into sub-groups and to use one of the sub-groups after the other. To further optimize the setup, it is preferable to order the subgroups such that the change from one subgroup to the next changes the focus position in the same direction, e.g. by positive or negative increments. This allows for minimizing the movement, and thus reducing any effects from mechanical hysteresis, or allows for minimizing the execution time of the image capture process, since the mechanical movement becomes minimized.

In the present invention, using the overlap of image data in Fourier space by different wavelengths based on the color corrected images in the image plan enables to use one full image set / given number of raw images, to generate separate synthesized images for one or multiple of the wavelengths used in data capture. An aspect of image synthesis with a reduced weight or only for proper stitching and alignment in stitching for more distant image information for the same wavelength or with much reduced overlap is provided compared to standard reconstruction methods.

The image capture is based on the different wavelengths employed to refocus the optics for the respective wavelength or bandwidth for optimal image contrast to compensate for chromatic (focus) aberrations of the optics. Refocus may also mean to rescale the image since the effective magnification can also change slightly when the focus position changes. This dependence of magnification on focus position and/or wavelength can be determined in standard calibration routines to determine system magnification e.g. by the use of scale bars or length artifacts or as relative scale factor related to an appropriate test structure, e.g. a binary pattern in a chrome on glass structure. With these calibration data, the images captured at a given wavelengths can be rescales in size prior to their application in the Fourier ptychographic reconstruction.

It should be understood that all advantageous options, variance in modifications described herein and the foregoing with respect to the embodiments of the array of light sources according to the first aspect may be equally applied to the embodiments of the Fourier ptychographic imaging system according to the second aspect and to the embodiments of the method according to the third aspect, and vice versa.

In the foregoing detailed description, various features are grouped together in one or more examples for the purpose of streamlining the disclosure. It is to be understood that the above description is intended to be illustrative, and not restrictive. It is intended to cover alternatives, modifications and equivalents. Many other examples will be apparent to one skilled in the art upon reviewing the above specification.

### List of Reference Signs

- 2: light source
- 3: carrier board
- 4: sample
- 5: sample plane
- 6: objective
- 7: region of interest
- 8: hollow rectangle
- 10: tube lens
- 12: camera
- 14: illuminating device
- 16: base unit
- 18: hemispherical carrier
- 20: circular sub-region
- 100: Fourier ptychographic imaging system
- S10-S30: method steps

## Claims

1. An array of light sources (2) for a Fourier ptychographic imaging system (100), comprising at least two adjacent light sources (2) which differ from each other in a property of light beams emitted from them and are configured to illuminate a sample (4) at different angles of incidence for reconstructing a single image of the sample using Fourier ptychography, wherein the property of light beams of each light source (2) is configured to match the sample (4) for increasing a contrast and/or a color or material information content in the reconstructed single image of the sample (4).

2. The array of light sources according to claim 1, wherein the property of light beams comprises a wavelength, a bandwidth, a spectral profile and/or a polarization of the light beams.

3. The array of light sources according to claim 1 or 2, wherein the contrast in the reconstructed single image of the sample (4) depends on an interaction property of the light beams of the respective light source (2) with a given location of the sample (4) .

4. The array of light sources according to claim 3, wherein the interaction property comprises an absorption, a refraction, a scattering and/or a diffraction of the light beams of the respective light source (2) at the given location of the sample (4) .

5. The array of light sources according to claim 3 or 4, wherein the interaction property depends on the property of light beams of the respective light source (2) and a material and/or a geometry at the given location of the sample (4).

6. The array of light sources according to any of the preceding claims, wherein the array of light sources (2) comprises at least three light sources (2) which are a first light source, a second light source and a third light source, wherein the first light source is adjacent to the second light source which is further adjacent to the third light source, wherein the first and second light sources differ from each other in a property of light beams emitted from them, wherein the second and third light sources differ from each other in a property of light beams emitted from them, and wherein the first and third light sources comprise the same property of light beams emitted from them.

7. The array of light sources according to claim 6, wherein in the reconstruction process using Fourier ptychography, an image taken by means of the second light source comprises a lower weighting factor than images taken by means of the first and third light sources.

8. The array of light sources according to claim 6, wherein in the reconstruction process using Fourier ptychography, an image taken by means of the second light source comprises the same weighting factor as images taken by means of the first and third light sources.

9. The array of light sources according to any of the preceding claims, wherein the array of light sources (2) comprises a plurality of light sources (2), in particular more than three light sources (2), preferably more than five light sources (2), wherein the plurality of light sources form at least two clusters, wherein light sources within each cluster are adjacent to each other, and wherein the property of light beams of light sources in each cluster is configured to match a given location of the sample (4) for increasing a contrast in the reconstructed single image of the given location of the sample (4).

10. The array of light sources according to any of the preceding claims, wherein the array of light sources is configured to be selected based on a type of the sample (4).

11. A Fourier ptychographic imaging system (100) comprising the array of light sources (2) according to any of the claims 1-10.

12. The Fourier ptychographic imaging system (100) according to claim 11, comprising a bandpass filter, a notch filter, a filter defining a complex spectral profile, and/or an edge filter arranged between the array of light sources (2) and a camera sensor (12) of the Fourier ptychographic imaging system (100).

13. The Fourier ptychographic imaging system (100) according to claim 11 or 12, wherein the Fourier ptychographic imaging system (100) comprises an objective (6), wherein an objective aperture of the objective (6) is dividable into a number of segments, wherein each segment of the objective aperture is associated with a light source (2) or a cluster of light sources (2) in the array of light sources (2).

14. A method of performing Fourier ptychography, comprising:
illuminating (S10) a sample at different angles of incidence by at least two adjacent light sources in an array of light sources, wherein the at least two adjacent light sources differ from each other in a property of light beams emitted from them, and the property of light beams of each of the at least two light source matches the sample for increasing a contrast in a single image of the sample to be reconstructed; capturing (S20) images of the sample by a camera, by means of the light beams from the at least two adjacent light sources; and reconstructing (S30) the single image of the sample by using the taken images.

15. The method according to claim 14, wherein the property of light beams comprises a wavelength, a bandwidth, and/or a polarization of the light beams.
